# EUROPÄISCHE PATENTSCHRIFT

(11) **EP 4 343 986 B1**
(45) Veröffentlichungstag und Bekanntmachung des Hinweises auf die Patenterteilung: **11.11.2026**
(21) Anmeldenummer: 22197637.6
(22) Anmeldetag: 26.09.2022
(51) Int. Cl.: H01R 39/08, H01R 13/6461, H01R 43/10

(54) **SCHLEIFRINGMODUL**
SLIP RING MODULE
MODULE DE BAGUE COLLECTRICE

(43) Veröffentlichungstag der Anmeldung: 27.03.2024
(73) Patentinhaber: Dr. Johannes Heidenhain GmbH, 83301 Traunreut (DE); LTN Servotechnik GmbH, 83624 Otterfing (DE)
(72) Erfinder: Weber, Volker, 83346 Bergen (DE); Schoppel, Günther, 86807 Buchloe (DE)

(56) Entgegenhaltungen:
- EP-A1- 3 641 076
- EP-B1- 3 683 902
- WO-A1-2012/136646
- CN-U- 203 674 531
- US-A- 2 551 030
- US-A1- 2019 245 312

## Beschreibung

### GEBIET DER TECHNIK

Die Erfindung betrifft ein Schleifringmodul gemäß dem Anspruch 1.

Eine Schleifringeinheit umfasst üblicherweise ein Schleifringmodul, das häufig als Rotor fungiert und eine weitere Baugruppe, die dann als Stator dient. Der Stator umfasst häufig zumindest eine Bürsteneinheit, wogegen der Rotor beziehungsweise das Schleifringmodul meist eine Folge von Schleifringen aufweist. Im Betrieb haben Bürsten der Bürsteneinheiten gleitenden Kontakt meist zu den Mantelseiten der rotierenden Schleifringe. Derartige Schleifringeinheiten werden in vielen technischen Gebieten eingesetzt um elektrische Signale oder elektrische Leistung von einer ortsfesten auf eine sich drehende elektrische Einheit oder in entgegengesetzter Richtung zu übertragen.

### STAND DER TECHNIK

In der Offenlegungsschrift WO 2019/141351 ist ein Verfahren zur Herstellung eines Schleifringmoduls offenbart, bei dem zunächst durch ein additives Herstellungsverfahren elektrisch leitfähige Elemente zusammen mit einer Hülle aus demselben Material hergestellt wird. In diese Hülle wird elektrisch isolierendes Material gegeben, das dann thermisch ausgehärtet wird. Danach wird die Hülle zumindest teilweise entfernt.

Aus der US 2 551 030 ist ein Schleifringmodul bekannt, das Schleifringe und daran angelötete Anschlussbolzen umfasst, wobei als Trägerkörper für die Schleifringe und die Anschlussbolzen eine faserverstärkte Vergussmasse dient.

In der WO 2012/136646 A1 wird ein Schleifring für die Übertragung elektrischer Signale offenbart, wobei der Schleifring aus einem ringförmigen Grundkörper besteht, der Aussparungen oder Hohlräume aufweist.

Die Druckschrift CN 203674531 U offenbart eine Schleifringeinheit mit mehreren Schleifringen, an denen jeweils eine Litze angeschweißt ist. Die Schleifringe werden auf ein isoliertes Aluminiumrohr aufgezogen, dessen Enden gleichzeitig als Lagersitze dienen.

### ZUSAMMENFASSUNG DER ERFINDUNG

Der Erfindung liegt die Aufgabe zugrunde ein Schleifringmodul zu schaffen, welches eine einfache und wirtschaftliche Herstellung erlaubt und welche qualitativ hochwertig ist, beispielsweise im Hinblick auf eine schnelle Datenübertragung.

Diese Aufgabe wird erfindungsgemäß durch die Merkmale des Anspruchs 1 gelöst.

Demnach umfasst das Schleifringmodul mehrere elektrisch leitende Elemente sowie einen dielektrischen Trägerkörper, in dem die elektrisch leitenden Elemente eingebettet sind. Das Material des dielektrischen Trägerkörpers umfasst einen keramischen, insbesondere anorganischen, Werkstoff. Das Schleifringmodul ist mit Hilfe eines additiven Verfahrens so hergestellt, dass die mehreren elektrisch leitenden Elemente jeweils einstückig ausgestaltet sind. Die elektrisch leitenden Elemente weisen jeweils einen ersten Bereich auf, der als ein Schleifring ausgebildet ist, und jeweils einen zweiten Bereich auf, der als ein Anschlussleiter ausgebildet ist. Der dielektrische Trägerkörper weist Stege auf, zwischen welchen sich Hohlräume befinden.

Als Anschlussleiter können diejenigen Bereiche der einstückigen elektrisch leitenden Elemente definiert werden, die dazu dienen elektrische Signale oder elektrische Leistung zum eigentlichen Bereich des Schleifkontakts beziehungsweise zum Schleifring (oder vom Schleifring weg) zu leiten. Die Anschlussleiter sind für sich genommen oder aber in Verbindung mit dem sie umgebenden Steg starr beziehungsweise steif ausgebildet. Bei konventionellen Schleifringmodulen wird diese Funktion des elektrischen Anschlusses häufig durch flexible Litzen erfüllt.

Mit Vorteil beträgt der Anteil des keramischen Werkstoffes an der Gesamtmasse des dielektrischen Trägerkörpers mindestens 80%, insbesondere mindestens 90%, vorteilhafterweise mindestens 95%.

Das additive Verfahren zur Herstellung des Schleifringmoduls kann auch als 3D-Druckverfahren, insbesondere als ein multimaterial 3D-Druckverfahren bezeichnet werden.

Das Schleifringmodul kann ein Bauteil einer zylindrischen Schleifringeinheit sein, bei der ein Statorelement mantelseitig mit einem Schleifring des Schleifringmoduls in Schleifkontakt ist. Der Schleifring weist dann eine insbesondere außen liegende um eine Achse umlaufende Mantelfläche auf.

Alternativ kann das Schleifringmodul aber auch für eine Tellerschleifringeinheit ausgeführt sein, bei der ein Statorelement stirnseitig mit einem Schleifring in Schleifkontakt ist.

Die Schleifringe können nachdem sie durch das additive Verfahren hergestellt worden sind optional, insbesondere mit einem Edelmetall, noch beschichtet werden.

Das Schleifringmodul ist insbesondere gut zur Übertragung von elektrischer Leistung und / oder von elektrischen Signalen, also zur Übertragung von Information, geeignet. Durch das Schleifringmodul können insbesondere auf vergleichsweise einfache Weise hochfrequente Signale übertragen werden.

Unter dem Begriff Hohlraum kann ein geschlossener oder ein offener Hohlraum verstanden werden. Ferner kann ein Steg flächig, beispielsweise als eine Wand, oder stabförmig ausgestaltet sein. Insbesondere ist ein Steg hier ein starres Gebilde.

In weiterer Ausgestaltung der Erfindung umfasst das Material der elektrisch leitenden Elemente Silber. Mit Vorteil beträgt der Anteil von Silber an der Gesamtmasse des elektrisch leitfähigen Elements mindestens 80%, insbesondere mindestens 90%, vorteilhafterweise mindestens 95%. Alternativ kann das Material der elektrisch leitenden Elemente auch Kupfer umfassen. Mit Vorteil beträgt dann der Anteil von Kupfer an der Gesamtmasse des elektrisch leitfähigen Elements mindestens 80%, insbesondere mindestens 90%, vorteilhafterweise mindestens 95%.

Erfindungsgemäß ist in einem Querschnitt des Schleifringmoduls der Anschlussleiter von den Stegen des dielektrischen Trägerkörpers umschlossen. Demnach ist sozusagen ein Hohlraum des dielektrischen Trägerkörpers mit dem Werkstoff der elektrisch leitenden Elemente ausgefüllt.

Erfindungsgemäß sind die Stege des dielektrischen Trägerkörpers derart ausgebildet, dass diese in einem Querschnitt des Schleifringmoduls eine umlaufende Form aufweisen. Bei dieser Bauweise begrenzt ein Steg einen innen liegenden Hohlraum. Demnach kann der Trägerkörper die Form eines, insbesondere regelmäßigen, Polygons aufweisen. Beispielsweise kann der Trägerkörper in Wabenform angeordnete Stege aufweisen, so dass also die Stege einen Prisma-förmigen Hohlraum mit einem Sechseck als Grundfläche begrenzen. Die Stege können auch so ausgestaltet sein, dass diese einen runden Querschnitt aufweisen. Alternativ kann der Trägerkörper auch als poröser Körper mit offenen und / oder geschlossenen Poren ausgestaltet sein.

Erfindungsgemäß weist das Schleifringmodul zumindest zwei Anschlussleiter auf, wobei in einem Querschnitt des Schleifringmoduls zwischen den zumindest zwei Anschlussleitern ein Hohlraum angeordnet ist.

Vorteilhafterweise ist zwischen zwei als Schleifringe ausgebildeten ersten Bereichen ein Hohlraum angeordnet.

Dabei kann zwischen den zwei Anschlussleitern oder zwischen zwei Schleifringen noch jeweils ein Steg angeordnet sein, so dass die zwei Anschlussleiter oder die zwei Schleifringe nicht unmittelbar an den betreffenden dazwischen liegenden Hohlraum angrenzen.

Mit Vorteil umfasst das Material des dielektrischen Trägerkörpers einen glaskeramischen Werkstoff. Somit ist daher unter dem Begriff keramischer Werkstoff auch ein Werkstoff zu verstehen, der der Gruppe der Glaskeramiken zugeordnet ist, also insbesondere ein Werkstoff, der aus einer polykristallinen und einer glasigen Phase besteht. Beispielsweise kann das Material des dielektrischen Trägerkörpers Aluminiumoxid, Siliziumoxid oder Siliziumnitrid umfassen.

Das Schleifringmodul ist insbesondere so ausgestaltet, dass zumindest eine der mehreren elektrisch leitenden Elemente sowie der dielektrische Trägerkörper innerhalb ein und desselben Querschnittes des Schleifringmoduls angeordnet sind. Diese Ausgestaltung wird durch ein additives Herstellungsverfahren erzeugt, bei dem innerhalb einer Schicht beziehungsweise eines Querschnitts des Schleifringmoduls zwei verschiedene Werkstoffe gedruckt werden, nämlich der Werkstoff für die elektrisch leitenden Elemente und der für den dielektrischen Trägerkörper. Vorteilhafterweise werden die mehreren elektrisch leitenden Elemente sowie der dielektrische Trägerkörper gleichzeitig zusammen gesintert. Hierfür ist es vorteilhaft, wenn der Werkstoff für die elektrisch leitenden Elemente Silber umfasst und der Werkstoff für den dielektrischen Trägerkörper eine Glaskeramik. Bei dieser Kombination kann eine geeignete Sintertemperatur eingestellt werden, ohne dass eine der Komponenten geschädigt werden würde.

Mit Vorteil weist das Schleifringmodul zudem ein als Lagersitz dienendes Bauteil auf, welches ebenfalls im Zuge des additiven Verfahrens hergestellt worden ist. Zur Vereinfachung des Prozesses kann der Werkstoff des Bauteils der gleiche Werkstoff sein wie der der elektrisch leitenden Elemente. Auch dieses Bauteil kann gleichzeitig zusammen mit dem Trägerkörper gesintert werden.

Vorteilhafte Ausbildungen der Erfindung entnimmt man den abhängigen Ansprüchen.

Weitere Einzelheiten und Vorteile des erfindungsgemäßen Schleifringmoduls ergeben sich aus der nachfolgenden Beschreibung eines Ausführungsbeispiels anhand der beiliegenden Figuren.

### KURZE BESCHREIBUNG DER ZEICHNUNGEN

Es zeigen die
- Figur 1: eine Längsschnitt-Ansicht eines Schleifringmoduls,
- Figur 2: eine Querschnitt-Ansicht D - D des Schleifringmoduls,
- Figur 3: eine weitere Querschnitt-Ansicht E - E des Schleifringmoduls.

### BESCHREIBUNG DER AUSFÜHRUNGSFORMEN

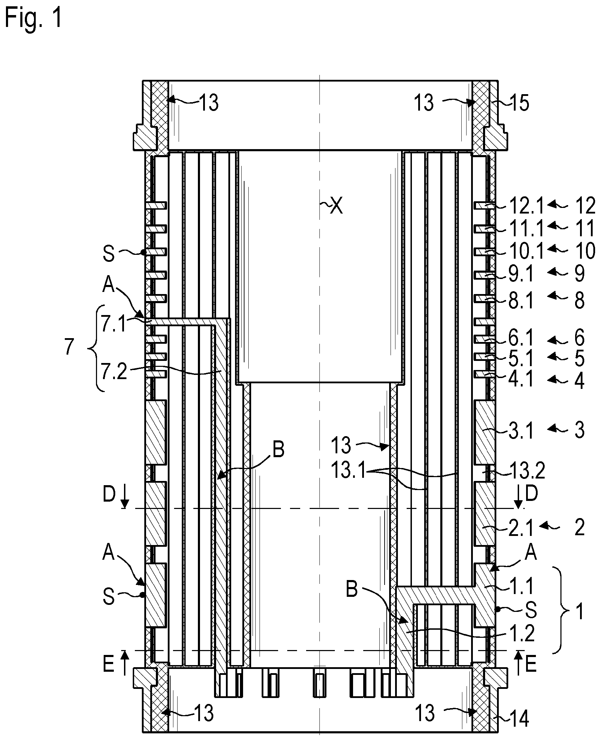

In der Figur 1 ist ein Schleifringmodul im Längsschnitt gezeigt, welches durch ein additives Verfahren hergestellt worden ist. Mit diesem additiven Herstellungsverfahren beziehungsweise 3D-Druckverfahren werden Schichten, die sich jeweils in einer Ebene (Querschnitt) senkrecht zu einer Achse X erstrecken, nacheinander aufgebaut, also in der Figur 1 beispielsweise von unten nach oben. Dabei können zwei Materialen in einer Schicht miteinander so kombiniert werden, dass in ein und derselben Schicht elektrisch leitende und nicht leitende Materialen additiv verarbeitet werden können. Im vorgestellten Ausführungsbeispiel werden im additiven Verfahren zwei lichtpolymerisierbare Materialien verwendet, nämlich ein silberhaltiges Material und ein glaskeramikhaltiges Material. Mit Hilfe dieses Verfahrens wird also sukzessive ein Körper aufgebaut, der gemäß der Terminologie der additiven Fertigungstechnik als Grünling bezeichnet wird.

Dieser Grünling wird danach zum so genannten Entbindern in einen Sinterbeziehungsweise Brennofen eingebracht. Bei erhöhter Temperatur zersetzen sich die organischen Harzkomponenten beziehungsweise das Bindemittel wobei die Materialen gleichzeitig zusammen gesintert werden.

Das mit einem derartigen Verfahren hergestellte Schleifringmodul weist elektrisch leitende Elemente 1 bis 12 sowie einen dielektrischen Trägerkörper 13 auf, wobei die elektrisch leitenden Elemente 1 bis 12 in den Trägerkörper 13 eingebettet sind. Zudem wurden mit dem additiven Verfahren zwei als Lagersitz dienende Bauteile 14, 15 hergestellt, die fest an dem Trägerkörper 13 angeformt sind. Das Material der elektrisch leitenden Elemente 1 bis 12 umfasst als wesentliche Komponente Silber und das Material des dielektrischen Trägerkörpers 13 einen glaskeramischen Werkstoff.

Die elektrisch leitenden Elemente 1 bis 12 sind jeweils einstückig ausgestaltet. Diese weisen stückweise jeweils einen ersten Bereich A auf, der im späteren bestimmungsgemäßen Betrieb jeweils als ein Schleifring 1.1, 2.1, 3.1, 4.1, 5.1, 6.1, 7.1, 8.1, 9.1, 10.1, 11.1, 12.1 ausgebildet ist. Die Schleifringe 1.1, 2.1, 3.1, 4.1, 5.1, 6.1, 7.1, 8.1, 9.1, 10.1, 11.1, 12.1 weisen im vorgestellten Ausführungsbeispiel eine zylindrische Form mit einer um die Achse X umlaufenden, außen liegenden Mantelfläche S auf. Weiterhin weisen die elektrisch leitenden Elemente 1 bis 12 jeweils einen zweiten Bereich B auf, der als ein Anschlussleiter 1.2, 2.2, 3.2, 4.2, 5.2, 6.2, 7.2, 8.2, 9.2, 10.2, 11.2, 12.2 ausgebildet ist und zumindest jeweils abschnittsweise parallel zur Achse X verläuft.

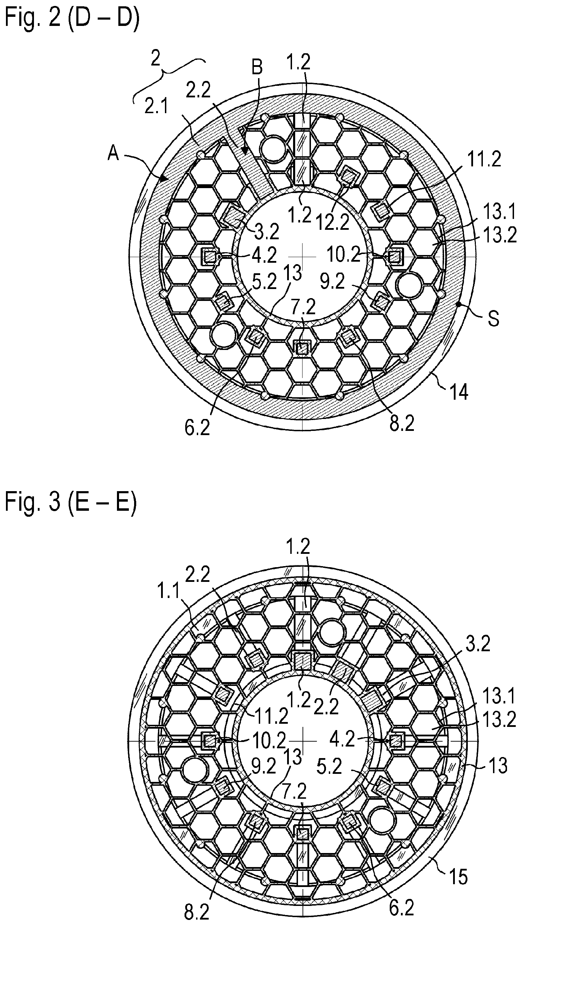

Der dielektrische Trägerkörper 13 ist nicht massiv ausgestaltet, sondern weist Stege 13.1 auf, zwischen welchen sich Hohlräume 13.2 befinden. Im vorgestellten Ausführungsbeispiel verlaufen die Stege 13.1 im Wesentlichen mit einer Richtungskomponente parallel zur Achse X. Insbesondere haben die Stege 13.1, die hier auch als Wände bezeichnet werden können, ihre längste Ausdehnung entlang einer Richtung, die parallel zur Achse X orientiert ist. Die Stege 13.1 sind gemäß den Figuren 2 und 3 so ausgebildet, dass diese in einem Querschnitt (z. B. Im Schnitt D - D oder E - E) des Schleifringmoduls eine umlaufende Form aufweisen, so dass ein Steg 13.1 einen innen liegenden Hohlraum 13.2 begrenzt. Im vorgestellten Ausführungsbeispiel sind die Stege 13.1 so ausgestaltet, dass diese in einem Querschnitt die Form eines regelmäßigen Sechsecks bilden, also wabenartig geformt sind. Die entsprechenden Waben sind hier durch den dielektrischen Trägerkörper 13 hindurch durchgängig und in axialer Richtung offen.

Wie aus den Figuren ersichtlich, sind in einem Querschnitt des Schleifringmoduls die Anschlussleiter 1.2, 2.2, 3.2, 4.2, 5.2, 6.2, 7.2, 8.2, 9.2, 10.2, 11.2, 12.2 insbesondere in den Bereichen B, in denen die Anschlussleiter 1.2, 2.2, 3.2, 4.2, 5.2, 6.2, 7.2, 8.2, 9.2, 10.2, 11.2, 12.2 parallel zur Achse X verlaufen, von den Stegen 13.1 des dielektrischen Trägerkörpers 13 umschlossen. Somit sind die elektrisch leitenden Elemente 1 bis 12 sowie der dielektrische Trägerkörper 13 innerhalb ein und desselben Querschnittes des Schleifringmoduls angeordnet.

Das Schleifringmodul ist so ausgestaltet, dass in einem Querschnitt des Schleifringmoduls, z. B. im Querschnitt E - E oder D - D, zwischen zwei Anschlussleitern 1.2, 2.2, 3.2, 4.2, 5.2, 6.2, 7.2, 8.2, 9.2, 10.2, 11.2, 12.2 ein oder mehrere Hohlräume 13.2 angeordnet ist / sind. Ebenso ist beziehungsweise sind zwischen den als Schleifringe 1.1, 2.1, 3.1, 4.1, 5.1, 6.1, 7.1, 8.1, 9.1, 10.1, 11.1, 12.1 ausgebildeten ersten Bereichen A ein oder mehrere Hohlräume 13.2 angeordnet, hier axial zwischen benachbarten Schleifringen 1.1, 2.1, 3.1, 4.1, 5.1, 6.1, 7.1, 8.1, 9.1, 10.1, 11.1, 12.1 liegend.

Das Schleifringmodul dient zum Übertragen von Strömen und / oder elektrischen Signalen, insbesondere hochfrequenten Signalen. Zu diesem Zweck werden Bürsten an die Mantelflächen S der als Schleifringe 1.1, 2.1, 3.1, 4.1, 5.1, 6.1, 7.1, 8.1, 9.1, 10.1, 11.1, 12.1 ausgebildeten ersten Bereichen A gebracht. Diese Bürsten haben bestimmungsgemäß während einer Rotationsbewegung des Schleifringmoduls permanent schleifenden Kontakt zu den umlaufenden Mantelflächen S.

Um geeignete Laufeigenschaften gewährleisten zu können, werden in der Schleifringeinheit in den Figuren nicht dargestellte Wälzlager mit einer Drehachse, die deckungsgleich mit der Achse X ist, eingebaut. In den Figuren sind lediglich die beiden Bauteile 14, 15 sichtbar, die als Lagersitze für Innenringe der Wälzlager dienen sollen. Auch diese Bauteile 14, 15 werden im additiven Verfahren hergestellt. Die Bauteile 14, 15 sind drehfest mit dem Trägerkörper 13 verbunden. Beispielsweise kann der 3D-Druck so ausgestaltet sein, dass eine formschlüssige Verbindung zwischen dem Trägerkörper 13 und den Bauteilen 14, 15 entsteht. Als Material für die Bauteile 14, 15 kann der Einfachheit halber das gleiche Material verwendet werden, wie für die elektrisch leitenden Elemente 1 bis 12.

Demnach kann das Schleifringmodul als Rotor innerhalb einer Schleifringeinheit bezeichnet werden, während die Bürsten einem Stator zugeordnet werden können. Über die Anschlussleiter 1.2, 2.2, 3.2, 4.2, 5.2, 6.2, 7.2, 8.2, 9.2, 10.2, 11.2, 12.2 können die Ströme und / oder Signale rotorseitig abgegriffen beziehungsweise eingeleitet werden.

Insbesondere durch die spezielle Ausgestaltung des Trägerkörpers 13 mit seinen Hohlräumen 13.2 können durch das Schleifringmodul Signale mit hohen Datenraten beispielsweise für Ethernet-, Sercosdatenverbindungen oder andere Echtzeitdatenverbindungen übertragen werden. Diese Eigenschaft resultiert letztmöglich daraus, dass durch die Anordnung aus Stegen 13.1 und Hohlräumen 13.2 als Isolator ein Trägerkörper 13 entsteht, welcher den Kopplungsgrad beziehungsweise das Übersprechen zwischen, insbesondere benachbarten, elektrisch leitenden Elementen 1 bis 12 erheblich reduziert.

Ferner weist das Schleifringmodul bedingt durch die Möglichkeiten des additiven Herstellungsverfahrens Schleifringe 1.1, 2.1, 3.1, 4.1, 5.1, 6.1, 7.1, 8.1, 9.1, 10.1, 11.1, 12.1 auf, die in radialer Richtung eine vergleichsweise geringe Ausdehnung haben. Diese Bauweise bewirkt eine vergleichsweise kleine elektrische Kapazität im Übertragungsweg, so dass auch dadurch hochfrequente Signale gut übertragbar werden, was zur Erhöhung der übertragbaren Bandbereite beiträgt.

Zudem werden durch die im Vergleich zu herkömmlichen Schleifringmodulen exakt definierte Führung der Anschlussleiter 1.2, 2.2, 3.2, 4.2, 5.2, 6.2, 7.2, 8.2, 9.2, 10.2, 11.2, 12.2 stets reproduzierbare geometrische Verhältnisse geschaffen. Diese Anordnung trägt zudem reproduzierbar zur gesteigerten Zuverlässigkeit bei der Übertragung hoher Datenraten innerhalb einer Typenserie bei.

## Patentansprüche

1. Schleifringmodul, das mehrere elektrisch leitende Elemente (1 bis 12) sowie einen dielektrischen Trägerkörper (13) umfasst, wobei das Material des dielektrischen Trägerkörpers (13) einen keramischen Werkstoff umfasst, wobei
das Schleifringmodul mit Hilfe eines additiven Verfahrens so hergestellt ist, dass
- die mehreren elektrisch leitenden Elemente (1 bis 12) jeweils einstückig ausgestaltet sind und jeweils einen ersten Bereich (A) aufweisen, der als ein Schleifring (1.1, 2.1, 3.1, 4.1, 5.1, 6.1, 7.1, 8.1, 9.1, 10.1, 11.1, 12.1) ausgebildet ist, und jeweils einen zweiten Bereich (B) aufweisen, der als ein Anschlussleiter (1.2, 2.2, 3.2, 4.2, 5.2, 6.2, 7.2, 8.2, 9.2, 10.2, 11.2, 12.2) ausgebildet ist, und
- der dielektrische Trägerkörper (13) Stege (13.1) aufweist, zwischen welchen sich Hohlräume (13.2) befinden, wobei
- der Anschlussleiter (1.2, 2.2, 3.2, 4.2, 5.2, 6.2, 7.2, 8.2, 9.2, 10.2, 11.2, 12.2) von Stegen (13.1) des dielektrischen Trägerkörpers (13) umschlossen ist, wobei
- die Stege (13.1) des dielektrischen Trägerkörpers (13) so ausgebildet sind, dass diese in einem Querschnitt des Schleifringmoduls eine umlaufende Form aufweisen, so dass ein Steg (13.1) einen innen liegenden Hohlraum (13.2) begrenzt, wobei
- das Schleifringmodul zumindest zwei Anschlussleiter (1.2, 2.2, 3.2, 4.2, 5.2, 6.2, 7.2, 8.2, 9.2, 10.2, 11.2, 12.2) aufweist, zwischen welchen in einem Querschnitt des Schleifringmoduls ein Hohlraum (13.2) angeordnet ist.

2. Schleifringmodul gemäß dem Anspruch 1, wobei der Schleifring (1.1, 2.1, 3.1, 4.1, 5.1, 6.1, 7.1, 8.1, 9.1, 10.1, 11.1, 12.1) eine außen liegende, umlaufende Mantelfläche (S) aufweist.

3. Schleifringmodul gemäß dem Anspruch 1 oder 2, wobei das Material der elektrisch leitenden Elemente (1 bis 12) Kupfer oder Silber umfasst.

4. Schleifringmodul gemäß einem der vorhergehenden Ansprüche, wobei der Steg (13.1) so ausgestaltet ist, dass dieser die Form eines, insbesondere regelmäßigen, Polygons aufweist.

5. Schleifringmodul gemäß einem der vorhergehenden Ansprüche, wobei zwischen zwei als Schleifringe (1.1, 2.1, 3.1, 4.1, 5.1, 6.1, 7.1, 8.1, 9.1, 10.1, 11.1, 12.1) ausgebildeten ersten Bereichen (A) ein Hohlraum (13.2) angeordnet ist.

6. Schleifringmodul gemäß einem der vorhergehenden Ansprüche, wobei das Material des dielektrischen Trägerkörpers (13) einen glaskeramischen Werkstoff umfasst.

7. Schleifringmodul gemäß einem der vorhergehenden Ansprüche, wobei das Schleifringmodul so ausgestaltet ist, dass zumindest eine der mehreren elektrisch leitenden Elemente (1 bis 12) sowie der dielektrische Trägerkörper (13) innerhalb ein und desselben Querschnittes angeordnet sind.

8. Schleifringmodul gemäß einem der vorhergehenden Ansprüche, wobei die mehreren elektrisch leitenden Elemente (1 bis 12) sowie der dielektrische Trägerkörper (13) gleichzeitig zusammen gesintert worden sind.

9. Schleifringmodul gemäß einem der vorhergehenden Ansprüche, wobei das Schleifringmodul zudem ein als Lagersitz dienendes Bauteil (14, 15) aufweist, welches ebenfalls im Zuge des additiven Verfahrens hergestellt worden ist.

## Claims

1. Slip ring module which comprises a plurality of electrically conductive elements (1 to 12) and a dielectric carrier body (13), wherein the material of the dielectric carrier body (13) comprises a ceramic material, wherein
the slip ring module is produced using an additive process such that
- the plurality of electrically conductive elements (1 to 12) are each designed in one piece and each have a first region (A), which is in the form of a slip ring (1.1, 2.1, 3.1, 4.1, 5.1, 6.1, 7.1, 8.1, 9.1, 10.1, 11.1, 12.1), and each have a second region (B), which is in the form of a connection conductor (1.2, 2.2, 3.2, 4.2, 5.2, 6.2, 7.2, 8.2, 9.2, 10.2, 11.2, 12.2), and
- the dielectric carrier body (13) has webs (13.1), between which there are cavities (13.2), wherein
- the connection conductor (1.2, 2.2, 3.2, 4.2, 5.2, 6.2, 7.2, 8.2, 9.2, 10.2, 11.2, 12.2) is enclosed by webs (13.1) of the dielectric carrier body (13), wherein
- the webs (13.1) of the dielectric carrier body (13) are formed such that they have an encircling shape in a cross section of the slip ring module, so that a web (13.1) delimits an inner cavity (13.2), wherein
- the slip ring module has at least two connection conductors (1.2, 2.2, 3.2, 4.2, 5.2, 6.2, 7.2, 8.2, 9.2, 10.2, 11.2, 12.2), between which a cavity (13.2) is arranged in a cross section of the slip ring module.

2. Slip ring module according to Claim 1, wherein the slip ring (1.1, 2.1, 3.1, 4.1, 5.1, 6.1, 7.1, 8.1, 9.1, 10.1, 11.1, 12.1) has an outer, circumferential lateral surface (S).

3. Slip ring module according to Claim 1 or 2, wherein the material of the electrically conductive elements (1 to 12) comprises copper or silver.

4. Slip ring module according to any of the preceding claims, wherein the web (13.1) is designed such that it has the shape of an, in particular regular, polygon.

5. Slip ring module according to any of the preceding claims, wherein a cavity (13.2) is arranged between two first regions (A) in the form of slip rings (1.1, 2.1, 3.1, 4.1, 5.1, 6.1, 7.1, 8.1, 9.1, 10.1, 11.1, 12.1).

6. Slip ring module according to any of the preceding claims, wherein the material of the dielectric carrier body (13) comprises a glass-ceramic material.

7. Slip ring module according to any of the preceding claims, wherein the slip ring module is designed such that at least one of the plurality of electrically conductive elements (1 to 12) and the dielectric carrier body (13) are arranged within the same cross section.

8. Slip ring module according to any of the preceding claims, wherein the plurality of electrically conductive elements (1 to 12) and the dielectric carrier body (13) have been sintered together simultaneously.

9. Slip ring module according to any of the preceding claims, wherein the slip ring module also has a component (14, 15) which serves as a bearing seat and has also been produced during the course of the additive process.

## Revendications

1. Module de bague collectrice, qui comprend plusieurs éléments électriquement conducteurs (1 à 12) ainsi qu'un corps de support diélectrique (13), le matériau du corps de support diélectrique (13) comprenant un matériau céramique,
le module de bague collectrice étant produit à l'aide d'un procédé additif de telle sorte que
- les plusieurs éléments électriquement conducteurs (1 à 12) sont chacun configurés d'une seule pièce et comportent chacun une première zone (A) qui est formée comme une bague collectrice (1.1, 2.1, 3.1, 4.1, 5.1, 6.1, 7.1, 8.1, 9.1, 10.1, 11.1, 12.1), et comportent chacune une deuxième zone (B) qui est formée comme un conducteur de connexion (1.2, 2.2, 3.2, 4.2, 5.2, 6.2, 7.2, 8.2, 9.2, 10.2, 11.2, 12.2), et
- le corps de support diélectrique (13) comporte des nervures (13.1) entre lesquelles se trouvent des cavités (13.2),
- le conducteur de connexion (1.2, 2.2, 3.2, 4.2, 5.2, 6.2, 7.2, 8.2, 9.2, 10.2, 11.2, 12.2) est entouré par des nervures (13.1) du corps de support diélectrique (13),
- les nervures (13.1) du corps de support diélectrique (13) étant formées de telle sorte qu'elles comportent une forme périphérique dans une section transversale du module de bague collectrice, de telle sorte qu'une nervure (13.1) délimite une cavité intérieure (13.2),
- le module de bague collectrice comportant au moins deux conducteurs de connexion (1.2, 2.2, 3.2, 4.2, 5.2, 6.2, 7.2, 8.2, 9.2, 10.2, 11.2, 12.2), entre lesquelles est disposée une cavité (13.2) dans une section transversale du module de bague collectrice.

2. Module de bague collectrice selon la revendication 1, la bague collectrice (1.1, 2.1, 3.1, 4.1, 5.1, 6.1, 7.1, 8.1, 9.1, 10.1, 11.1, 12.1) comportant une surface enveloppante périphérique extérieure (S).

3. Module de bague collectrice selon la revendication 1 ou 2, le matériau des éléments électriquement conducteurs (1 à 12) comprenant du cuivre ou de l'argent.

4. Module de bague collectrice selon l'une des revendications précédentes, la nervure (13.1) étant configurée sous la forme d'un polygone, en particulier régulier.

5. Module de bague collectrice selon l'une des revendications précédentes, une cavité (13.2) étant disposée entre deux premières zones (A) formées comme des bagues collectrices (1.1, 2.1, 3.1, 4.1, 5.1, 6.1, 7.1, 8.1, 9.1, 10.1, 11.1, 12.1).

6. Module de bague collectrice selon l'une des revendications précédentes, le matériau du corps de support diélectrique (13) comprenant un matériau vitrocéramique.

7. Module de bague collectrice selon l'une des revendications précédentes, le module de bague collectrice étant configuré de telle sorte qu'au moins l'un des plusieurs éléments électriquement conducteurs (1 à 12) ainsi que le corps de support diélectrique (13) sont disposés à l'intérieur d'une seule et même section transversale.

8. Module de bague collectrice selon l'une des revendications précédentes, les plusieurs éléments électriquement conducteurs (1 à 12) ainsi que le corps de support diélectrique (13) ayant été frittés ensemble simultanément.

9. Module de bague collectrice selon l'une des revendications précédentes, le module de bague collectrice comportant en outre un composant (14, 15) servant de siège de palier, qui a également été fabriqué au cours du procédé additif.
